# EUROPÄISCHE PATENTSCHRIFT

(11) **EP 0 501 953 B1**
(45) Veröffentlichungstag und Bekanntmachung des Hinweises auf die Patenterteilung: **21.04.1993**
(21) Anmeldenummer: 90902161.0
(22) Anmeldetag: 31.01.1990
(51) Int. Cl.: G05D 23/13

(54) **SANITÄRE MISCHBATTERIE**
TAP-WATER MIXER UNIT
MELANGEUR SANITAIRE

(30) Priorität: 25.11.1989 DE 3939077
(43) Veröffentlichungstag der Anmeldung: 09.09.1992
(73) Patentinhaber: IDEAL-STANDARD GMBH, D-53008 Bonn (DE)
(72) Erfinder: EMS, Josef, D-5560 Wittlich (DE)
(74) Vertreter: Müller, Karl-Ernst, Dr., Dipl.-Ing.
(86) Internationale Anmeldenummer: DE9000059
(87) Internationale Veröffentlichungsnummer: WO9108532

(56) Entgegenhaltungen:
- EP-A- 0 307 738
- DE-A- 2 355 101
- GB-A- 492 052
- US-A- 2 332 995

## Beschreibung

Die Erfindung bezieht sich auf eine thermostatisch gesteuerte sanitäre Mischbatterie mit einer Temperatursteuerung und einer Mengensteuerung, wobei für die Mengensteuerung eine Spindel zur gleichzeitigen Betätigung von zwei in einem Kaltwasserzulauf und in einem Warmwasserzulauf vorgesehenen einzelnen Ventilen für die Absperrung und Mengensteuerung vorgesehen ist, deren bewegliche Ventilverschlußglieder für eine sichere Absperrung unabhängig voneinander gegenüber den zugehörigen Ventilsitzen feineinstellbar sind.

Mischbatterien dieser Art sind aus der DE-PS 23 55 101 bekannt. Dabei ist eine sogenannte Steuerachse als Spindel vorgesehen, auf der zwei Ventilkegel als Ventilverschlußglieder für die Absperrung und Mengensteuerung des kalten sowie warmen Wassers angeordnet sind, wobei einer der Ventilkegel relativ zur Steuerachse verstellbar ist. Durch eine solche Anordnung kann jederzeit eine voneinander unabhängige Feineinstellung der Ventilkegel gegenüber den zugehörigen Ventilsitzen vorgenommen werden, falls eine sichere Absperrung nicht oder nicht mehr gegeben ist, jedoch ist für eine solche Feineinstellung nicht nur die Demontage des Absperr- und Mengengriffes erforderlich, sondern auch die Verwendung eines Werkzeuges.

Der Erfindung liegt die Aufgabe zugrunde, diesen Nachteil zu beseitigen und eine sanitäre Mischbatterie der eingangs genannten Art zu schaffen, bei welcher eine gegebenenfalls notwendige Feineinstellung der beweglichen Ventilverschlußglieder beim Absperren der Mischbatterie automatisch erfolgt.

Diese Aufgabe ist erfindungsgemäß im wesentlichen dadurch gelöst, daß die Spindel als Zentralspindel mit einem in ihrem den Ventilen zugewandten Endbereich fest angeordneten Zahnkranz ausgebildet ist und daß jedes Ventil zu seiner Betätigung mit einer Einzelspindel verbunden ist, wobei jede Einzelspindel zur Ausbildung einer Rutschkupplung einen auf ihrem freien Ende fest angeordneten Lagerring aufweist, auf welchem relativ beweglich dazu ein mit dem Zahnkranz der Zentralspindel in Eingriff stehender Zahnkranz sitzt. Ausgestaltungen der Erfindung sind in den Unteransprüchen gekennzeichnet.

Aus der US-A-2 332 995 wie auch der GB-A-492 052 ist jeweils bereits eine sanitäre Mischbatterie (bei der US-A-2 332 995 auch thermostatisch gesteuerte Mischbatterie) bekannt, bei welcher die beiden Ventile im Kalt- und Warmwasserzulauf jeweils einen Zahnkranz aufweisen, der mit einem Zahnkranz einer Zentralspindel für die Mengensteuerung in Verbindung steht; allerdings handelt es sich bei der Zahnkranz-Verbindung um eine dauerhafte und in jeder Betriebslage der Armatur wirksame formschlüssige Verbindung, die ein Nachstellen insbesondere nur eines der beiden Ventile beim Absperren der Mischbatterie nicht erlaubt.

Erfindungsgemäß wird die Rutschkupplung immer in den Fällen automatisch wirksam, in denen bei der Absperrung der Mischbatterie eines der Ventilverschlußglieder nicht gleichzeitig mit dem anderen Ventilverschlußglied die zugehörige Wasserdurchtrittsöffnung vollkommen verschließt. In einem solchen Fall erfolgt über eine geringfügige weitere Betätigung der Zentral-Spindel einerseits eine Relativbewegung zwischen dem Zahnkranz und dem Lagerring des bereits geschlossenen Ventils, da dessen Endanschlag schon erreicht ist, und andererseits wird über die Zentral-Spindel gleichzeitig die Einzelspindel des anderen Ventils bis zu dessen vollkommener Absperrung weiterhin betätigt, was automatisch zu einer Feineinstellung des entsprechenden Ventilverschlußgliedes gegenüber dem zugehörigen Ventilsitz führt.

In der Zeichnung ist der Erfindungsgegenstand in einem Ausführungsbeispiel dargestellt, und zwar zeigen:

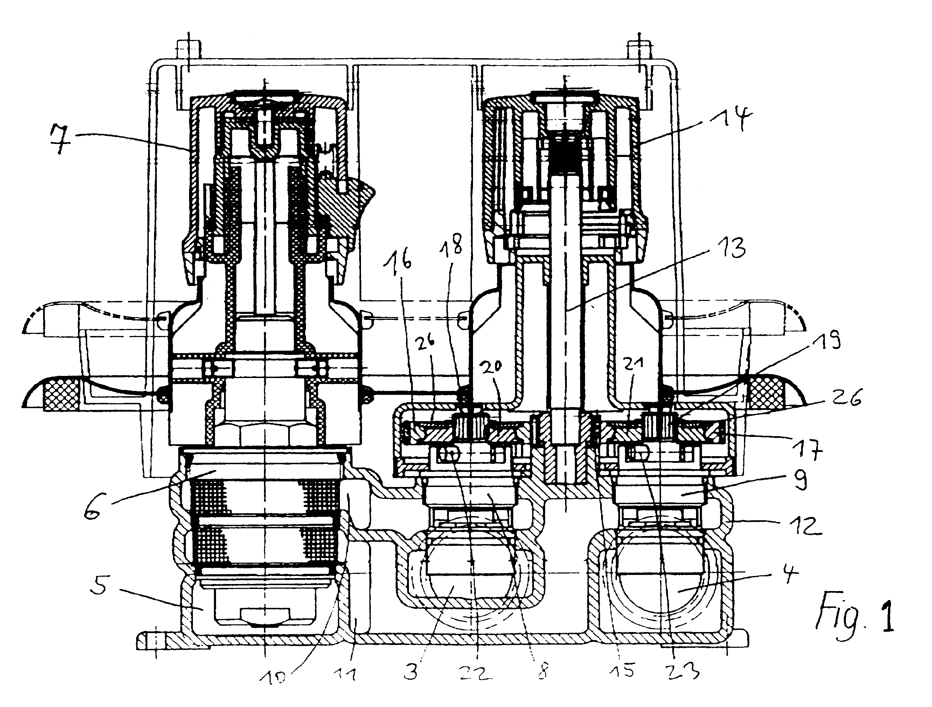

- Fig. 1: eine erfindungsgemäße Mischbatterie in einer Unterputz-Ausführung im Längsschnitt und
- Fig. 2: eine erfindungsgemäße Rutschkupplung in vergrößerter Darstellung.

Darin ist mit 3 ein Kaltwasserzulauf, mit 4 ein Warmwasserzulauf und mit 5 eine Mischkammer bzw. ein Mischwasserabgang bezeichnet. In Strömungsrichtung vor einer herkömmlichen und deshalb nicht näher erläuterten Thermostat-Steuerung 6 mit einem Betätigungsgriff 7 für die Temperatur-Voreinstellung und damit vor der Mischkammer 5 sind ein Kaltwasserventil 8 sowie ein Warmwasserventil 9 vorgesehen, von denen das Wasser über Durchtritte 10 und 11 in die Thermostat-Steuerung 6 strömt. Die Ventile 8 und 9 dienen zur Absperrung und Mengensteuerung und bestehen aus kartuschenförmigen Baueinheiten, die in ein Mischbatteriegehäuse 12 eingeschraubt sind. Als Steuerelemente dienen nicht näher gezeigte Scheiben aus Aluminiumoxid, von denen in bekannter Weise eine als feststehender Ventilsitz und die andere scheibe als bewegliches Ventilverschlußglied ausgebildet ist.

Die Ventile 8 und 9 werden über eine Zentral-Spindel 13 mittels eines Betätigungsgriffes 14 gleichzeitig angetrieben. Hierfür ist die Zentral-Spindel 13 in ihrem den Ventilen 8 und 9 zugewandten Endbereich mit einem fest angeordneten Zahnkranz 15 versehen, der mit zwei Zahnkränzen 16 und 17 in Eingriff steht, die mit zwei Einzelspindeln 18 und 19 für die Ventile 8 und 9 zusammenwirken.

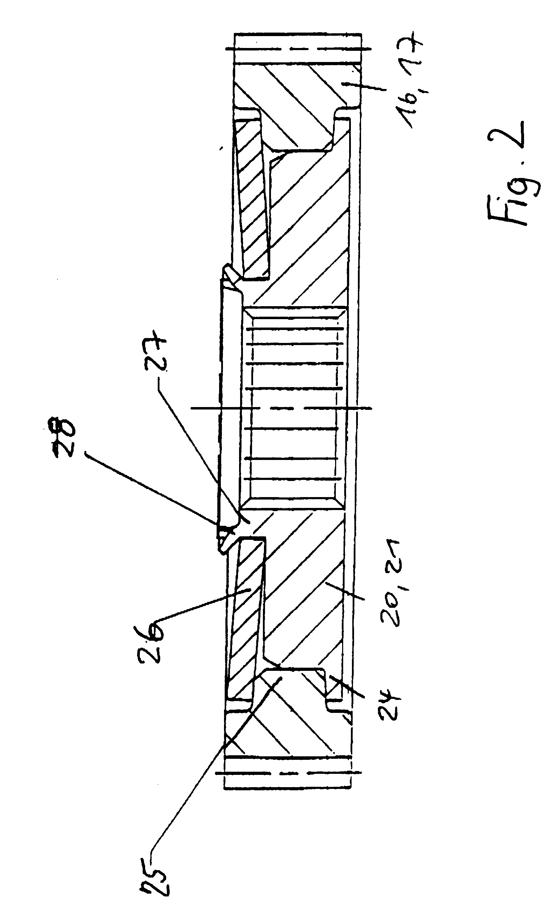

Aus der Figur 2 ist besonders deutlich ersichtlich, daß die Zahnkränze 16 und 17 zur Bildung einer Rutschkupplung auf zwei Lagerringen 20 und 21 gehalten sind. Die Lagerringe 20 und 21 sind auf den freien, geriffelten Enden der Einzelspindeln 18 und 19 fest angeordnet, deren Drehbewegung durch Anschläge 22 und 23 begrenzt ist.

Die Lagerringe 20 und 21 sind mit einem Außenkragen 24 versehen. Auf dem Außenkragen 24 stützen sich die Zahnräder 16 und 17 mit der einen Seite eines Innenkragens 25 ab. Die andere Seite des Innenkragens 25 wirkt mit einem Federring 26 zusammen, der auf einem Zapfen 27 der Lagerringe gehalten ist. Dieser Federring 26 drückt zur Bildung der Rutschkupplung den Innenkragen 25 der Zahnkränze 16 und 17 gegen den Außenkragen 24 der Lagerringe 20 und 21. Zur axialen Halterung und Abstützung des Federringes 26 ist der Zapfen 27 mit einem Bördelrand 28 versehen.

Sollte es sich beim Absperren der Mischbatterie ergeben, daß eines der beweglichen Ventilverschlußglieder nicht gleichzeitig mit dem anderen Ventilverschlußglied die zugehörige Wasserdurchtrittsöffnung vollkommen verschließt, zum Beispiel nicht die Wasserdurchtrittsöffnung des Kaltwasserventils 8, so wird die Rutschkupplung auf der Seite des bereits geschlossenen Warmwasserventils 9 wirksam, da dessen Endanschlag 23 ein weiteres drehen der Einzelspindel 19 verhindert. Über die Zentral-Spindel 13 wird nun aber die Einzelspindel 18 des Kaltwasserventils 8 bis zur vollkommenen Absperrung weiterhin betätigt und damit bis zum Wirksamwerden auch des zweiten Endanschlags 22. In Absperrichtung können jetzt nur noch die Zahnräder 16 und 17 der Einzelspindeln 18 und 19 gedreht werden.

Erfindungsgemäß ergibt sich beim Absperrvorgang immer automatisch eine gegebenenfalls erforderliche Feineinstellung der beweglichen Ventilverschlußglieder gegenüber den zugehörigen Ventilsitzen, wodurch immer eine sichere Absperrung gewährleistet ist und Montage- sowie Wartungsarbeiten erleichtert sind.

Zudem werden mit der in Strömungsrichtung vor der Mischkammer 5 erfolgenden Absperrung gleichzeitig sogenannte Cross-Flow-Gefahren vermieden, also das Eintreten von Warmwasser in die Kaltwasserleitung oder umgekehrt. bei einer in Strömungsrichtung hinter der Mischkammer 5 erfolgenden Absperrung sind zusätzlich Rückschlagventile zwingend erforderlich, die aber insbesondere bei niedrigen Drücken eine sichere Funktion nicht mehr gewährleisten, was die Erfahrung gezeigt hat.

Die dargestellte und beschriebene Ausführung ist nur ein Beispiel zur Verwirklichung der Erfindung, und diese ist nicht darauf beschränkt, vielmehr sind im Rahmen des erfindungsgemäßen Grundgedankens auch noch andere Ausführungs- und Anwendungsmöglichkeiten gegeben. So könnten die Ventile 8 und 9 auch mit axial beweglichen Ventilverschlußgliedern, nämlich sogenannten Ventilkegeln, ausgerüstet sein, und schließlich ist der Einsatz einer erfindungsgemäßen Rutschkupplung auch für andere Ventilbauarten denkbar.

## Patentansprüche

1. Thermostatisch gesteuerte sanitäre Mischbatterie mit einer Temperatursteuerung (6, 7) und einer Mengensteuerung (14), wobei für die Mengensteuerung (14) eine Spindel (13) zur gleichzeitigen Betätigung von zwei in einem Kaltwasserzulauf (3) und in einem Warmwasserzulauf (4) vorgesehenen einzelnen Ventilen (8, 9) für die Absperrung und Mengensteuerung vorgesehen ist, deren bewegliche Ventilverschlußglieder für eine sichere Absperrung unabhängig voneinander gegenüber den zugehörigen Ventilsitzen feineinstellbar sind, dadurch gekennzeichnet, daß die Spindel (13) als Zentralspindel mit einem in ihrem den Ventilen (8, 9) zugewandten Endbereich fest angeordneten Zahnkranz (15) ausgebildet ist und daß jedes Ventil (8, 9) zu seiner Betätigung mit einer Einzelspindel (18, 19) verbunden ist, wobei jede Einzelspindel (18, 19) zur Ausbildung einer Rutschkupplung einen auf ihrem freien Ende fest angeordneten Lagerring (20, 21) aufweist, auf welchem relativ beweglich dazu ein mit dem Zahnkranz (15) der Zentralspindel (13) in Eingriff stehender Zahnkranz (16, 17) sitzt.

2. Sanitäre Mischbatterie nach Anspruch 1, dadurch gekennzeichnet, daß die Lagerringe (20, 21) mit einem Außenkragen (24) versehen sind, auf dem die Zahnkränze (16, 17) mit der eine Seite eines Innenkragens (25) ruhen, während die andere Seite des Innenkragens (25) mit einem Federring (26) zusammenwirkt, der auf einem Zapfen (27) der Lagerringe (20, 21) gehalten ist und zur Bildung der Rutschkupplung (24, 25, 26) den Innenkragen (25) der Zahnkränze (16, 17) gegen den Außenkragen (24) der Lagerringe (20, 21) drückt.

3. Sanitäre Mischbatterie nach Anspruch 2, dadurch gekennzeichnet, daß der Zapfen (27) mit einem äußeren Bördelrand (28) zur Halterung und Abstützung des Federringes (26) versehen ist.

## Claims

1. A thermostat-controlled sanitary mixing unit with a thermostat control (6, 7) and a flow control (14), the flow control (14) comprised of a spindle (13) for simultaneously activating tuo single valves (8, 9) being connected to a cold water inlet (3) and a hot water inlet (4) for shutting off and controlling flow, the valves comprising a movable valve closing member and a valve seat, said valve closing members being fine adjustable relative to said corresponding valve seat independent from one another for a secure shut-off, characterised in that the spindle (13) is in the form of a central spindle comprising a toothed wheel (15) that is fixedly attached to one end of said control spindle facing said valves (8, 9), and each said valve (8, 9) is connected to a single spindle (18, 19) for activating said valve, each single spindle (18, 19), for the formation of a slip coupling, comprising a bearing ring (20, 21) fixedly connected to a free end of said spindle and a spur gear (16, 17) connected to said bearing ring so as to be movable relative to said bearing ring, said spur gear engaging said toothed wheel (15) of the control spindle (13).

2. A sanitary mixing unit according to claim 1, characterised in that the bearing rings (20, 21) are provided with an outer collar (24) on which the spur gears (16, 17) rest with one side of an inner collar (25) while the other side of the inner collar (25) cooperates with a spring ring (26) which is held on a peg (27) of the bearing rings (20, 21) and, for the formation of the slip coupling (24, 25, 26), presses the inner collar (25) of the spur gears (16, 17) against the outer collar (24) of the bearing rings (20, 21).

3. A sanitary mixing unit according to claim 2, charcterised in that the peg (27) is provided with an outer beaded edge (28) for holding and supporting the spring ring (26).

## Revendications

1. Batterie de mitigeurs sanitaires à commande thermostatique, avec une commande de température (6,7) et une commande de débit (14), dans laquelle, pour la commande (14) est prévue une broche (13) destinée à actionner simultanément deux robinets (8,9) spécifiques, prévus dans une amenée d'eau froide (3) et une amenée d'eau chaude (4) pour assurer l'isolement et la commande des débits, robinets (8,9) dont les organes d'obturation de robinet mobiles sont susceptibles d'être soumis à un réglage fin, par rapport aux sièges de robinet correspondants, indépendamment l'un de l'autre, en vue d'obtenir un isolement sûr, caractérisée en ce que la broche (13) est réalisée sous forme de broche centrale avec une couronne dentée (15) montée, fixe, dans la zone d'extrémité tournée vers les robinets (8,9) et en ce que chaque robinet (8,9) est relié, en vue de son actionnement, à une broche individuelle (18, 19), chaque broche individuelle présentant, pour constituer un accouplement à friction, une bague de palier (20,21) montée fixe sur son extrémité libre et sur laquelle est placée, de façon mobile par rapport à cette dernière, une couronne dentée (16,17) engrenant avec la couronne dentée (15) de la broche centrale (13).

2. Batterie de mitigeurs sanitaires selon la revendication 1, caractérisée en ce que les bagues de palier (20,21) sont pourvues d'une collerette extérieure (24), sur laquelle les couronnes dentées (16,17) reposent, par une face d'une collerette intérieure (25), tandis que l'autre face de la couronne intérieure (25) coopère avec une bague élastique (26) maintenue sur un tourillon (27) des bagues de palier (20,21) et pressant la collerette intérieure (25) des couronnes dentées (16,17) contre la collerette extérieure (24) des bagues de palier (20,21), en vue de former l'accouplement à friction (24,25,26).

3. Batterie de mitigeurs sanitaires selon la revendication 2, caractérisée en ce que le tourillon (27) est pourvu d'une bordure de pourtour extérieur (28), en vue d'assurer la fixation et l'appui de la bague élastique (26).
